# EUROPÄISCHE PATENTSCHRIFT

(11) **EP 2 318 234 B1**
(45) Veröffentlichungstag und Bekanntmachung des Hinweises auf die Patenterteilung: **07.10.2015**
(21) Anmeldenummer: 09776052.4
(22) Anmeldetag: 06.08.2009
(51) Int. Cl.: B60R 11/02, B60R 11/00

(54) **BEFESTIGUNGSVORRICHTUNG ZUR LÖSBAREN BEFESTIGUNG EINES TRANSPORTABLEN ELEKTRONISCHEN GERÄTS**
FIXING APPARATUS FOR DETACHABLY FIXING A PORTABLE ELECTRONIC DEVICE
DISPOSITIF DE FIXATION DESTINÉ À LA FIXATION LIBÉRABLE D'UN APPAREIL ÉLECTRONIQUE PORTABLE

(30) Priorität: 13.08.2008 DE 102008038952; 15.06.2009 DE 102009025276
(43) Veröffentlichungstag der Anmeldung: 11.05.2011
(73) Patentinhaber: Garmin Switzerland GmbH, 8200 Schaffhausen (CH)
(72) Erfinder: DIMITRIADIS, Andreas, 73547 Lorch (DE); HEINEN, Antje, 81375 München (DE); SATTLER, Karl, 97209 Veitshöchheim (DE); BOYSEN, Lars, 22587 Hamburg (DE)
(74) Vertreter: UEXKÜLL & STOLBERG
(86) Internationale Anmeldenummer: PCT/DE2009/001090
(87) Internationale Veröffentlichungsnummer: WO 2010/017804

(56) Entgegenhaltungen:
- EP-A1- 2 030 844
- WO-A1-2008/055885
- DE-U1- 29 513 581
- DE-U1-202007 008 288

## Beschreibung

Die Erfindung betrifft eine Befestigungsvorrichtung zur lösbaren Befestigung eines transportablen, elektronischen Geräts, insbesondere eines mobilen Navigationsgeräts.

Es ist bekannt zur Befestigung von mobilen, elektronischen Geräten in Kraftfahrzeugen diese in einer Haltevorrichtung zu verspannen, wobei die Haltevorrichtung wiederum im Kraftfahrzeug vorzugsweise im Bereich des Armaturenbretts angeordnet ist, um das tragbare elektronische Gerät im Sichtfeld des Fahrers anzuordnen. Dazu wird das Gerät üblicherweise in einen an dessen äußeren Umriss angepasst ausgeformten Bereich der Haltevorrichtung eingelegt und beispielsweise über an der Haltevorrichtung angeordnete Klemmbacken mit der Haltevorrichtung verklemmt. Zur Anordnung der Haltevorrichtung selbst wird oft ein Klippverschluss an den Schlitzen der Luftauslässe des Heizungsgebläses angeordnet.

Aus dem Stand der Technik zeigt dazu die DE 20 2005 003 896 U1 einen tragbaren Elektrogerätehalter, der aus einem feststehenden und einem beweglichen Teil besteht. Diese beiden Teile sind im Wesentlichen halbschalenförmig ausgebildet und bilden eine zweiteilige Halteplatte, die sich nach vorne öffnet. Damit ein eingelegtes Gerät auch seitlichen Halt erfährt, ist der bewegliche Teil der Halteplatte in der Art einer Schale auch seitlich abgewinkelt. Im Ergebnis ergibt sich so eine Halbschale, deren Hohlraumvolumen durch die Verschiebung beider Rückenelemente verändert werden kann, wobei ein darin eingelegtes Elektrogerät von den abgewinkelten Bereichen geklemmt wird. Im oberen Bereich des Halters ist zudem eine Arretierung vorgesehen, mit der das Elektrogerät fest in die Haltevorrichtung gespannt werden kann. Vor allem erweisen sich bei der Herstellung die kompliziert geformten Elemente der mehrteiligen Befestigungsvorrichtung als nachteilig.

Ferner betrifft die WO 2007/100239 A1 zur Befestigung eines Navigationsgeräts eine Haltevorrichtung bestehend aus einem fahrzeugseitigen Halteelement mit einer verklemmbaren Bodenplatte, auf der ein Konturelement in verschiedenen Stellungen angeordnet werden kann. An der Unterseite des Navigationsgeräts ist eine Ausnehmung vorgesehen, die formkomplementär zu dem Konturelement der Haltevorrichtung ausgebildet ist, um das Navigationsgerät mit dieser Ausnehmung an dem Konturelement anzuordnen. Aufgrund der verschiedenen Möglichkeiten zur Positionierung des Konturelements an der Bodenplatte mit verschiedenen Rastpositionen kann auch das Navigationsgerät in verschiedene Positionen gebracht werden. An der Schnittstelle von Navigationsgerät und Konturelement ist zudem eine elektrische Schnittstelle vorgesehen. Unter anderem erweist sich dabei als nachteilig, dass die Vorrichtung aus vielen Einzelteilen aufgebaut ist.

Einen Adapter zur einfachen Montage von elektronischen Geräten in Fahrzeugen zeigt die gattungsbildende Schrift WO 2008/055885 A1. Hierbei ist eine fahrzeugseitige Halterung inklusive Steckverbindung vorgesehen, auf der ein Kugelgelenk angeordnet ist. Auf anderer Seite des Kugelgelenks befindet sich eine Aufnahme für das elektronische Gerät. Hierbei weist die Aufnahme eine senkrecht zur Grundplatte angeordnete untere Abstützung auf, welche komplementär zur Außengeometrie des Gehäuses ausgebildet ist. Diese Abstützung ist zugleich Führung zur Montage des elektronischen Gerätes. Insofern erfolgt die Montage senkrecht zur Grundplatte. Zur Fixierung der Endstellung besitzt die Aufnahme weiterhin eine oberseitig angeordnete Verrastung, welche ein ungehindertes Zurückgleiten des Gerätes von der Aufnahme verhindert.

Eine hierzu vergleichbare Lösung zeigt die Schrift DE 20 2007 008 288 U1. Wiederum besitzt die Aufnahme ausgehend von einer Grundplatte obere und untere Halteelemente. Das untere Halteelement ist hierbei abgewinkelt aus der Grundplatte in Form eines Verankerungsabschnitts ausgebildet. Da im Gegensatz zur vorherigen Lösung nur eine kurze Auflagefläche angeboten wird, ist der Verankerungsabschnitt zur Verhinderung eines Herabgleitens des elektronischen Geräts von der Aufnahme mit einer Rasterhöhung versehen. Komplementär hierzu weist das elektronische Gerät eine Rastausnehmung entlang der unteren Auflagefläche auf. Oberseitig ist vorgesehen, dass mittels zweiter Rastclipse das elektronische Gerät gleichfalls wie bei vorheriger Lösung gesichert wird. Nachteilig bei den zuvor beschriebenen Ausführungsformen ist es, dass der Bediener zur Anbringung des elektronischen Geräts an der Aufnahme die zur Montage bestimmte Position genau treffen muss.

Ausgehend von diesem Stand der Technik ist es die Aufgabe der vorliegenden Erfindung, eine Befestigungsvorrichtung für ein elektronisches Gerät, insbesondere ein Navigationsgerät, zur Verfügung zu stellen, mit der sich die im Stand der Technik vorzufindenden Nachteile überwinden lassen.

Diese Aufgabe wird erfindungsgemäß durch eine Befestigungsvorrichtung nach der Lehre des Anspruchs 1 gelöst.

Bevorzugte Ausführungsformen der Erfindung sind Gegenstand der Unteransprüche.

Wie von gattungsgemäßen Haltevorrichtungen bekannt, weist die Befestigungsvorrichtung in an sich zunächst einmal bekannter Weise zur lösbaren Befestigung eines transportablen elektronischen Geräts, insbesondere eines mobilen Navigationsgeräts, eine Grundplatte auf, die mit einer Montageeinrichtung zur fahrzeugseitigen Anordnung versehen ist. Um ein transportables elektronisches Gerät an der Grundplatte anzuordnen, weist diese mindestens ein starres Halteelement und/oder mindestens ein bewegliches Halteelement auf, wobei jedes Halteelement in Ausformungen an dem transportablen elektronischen Gerät in Eingriff bringbar ist. Erfindungsgemäß weist die Grundplatte einen Vorsprung auf, der in einer Fixierstellung in eine formkomplementäre Ausnehmung auf der Rückseite des transportablen elektronischen Geräts zur Anlage bringbar ist. Im Ergebnis wird es damit ermöglicht, dass einerseits ein Anlagebereich der Befestigungsvorrichtung in eine Ausnehmung am transportablen elektronischen Gerät eingelegt wird, so dass schon aufgrund der formschlüssigen Anlage das Gerät nicht aus der Befestigungsvorrichtung rutschen kann, wenn Kräfte in der Ebene der Grundplatte wirken. Durch die Halteelemente kann das Gerät nun zudem mit der Befestigungsvorrichtung verspannt werden, wobei das Gerät von dem beweglichen Halteelement gegen das starre Halteelement gedrückt wird, wobei eine Kraft vom beweglichen Halteelement über beide Ausformungen an dem transportablen elektronischen Gerät auf das starre Halteelement übertragen wird.

In der erfinderischen Ausführungsform ist es vorgesehen, dass mindestens ein Halteelement zumindest bereichsweise sichelförmig ausgebildet ist. Dies soll insbesondere die Kontaktfläche vergrößern und einem seitlich einhakenden beweglichen Halteelement eine größere Auflagefläche und somit Kraftübertragung gewährleisten. Auf Seiten des starren Halteelements kann die sichelförmige Ausführungsform zumindest bereichsweise Elastizität gewährleisten, so dass ein eingelegtes transportables elektronisches Gerät mit der Grundplatte verspannt wird. Ferner hat die sichelförmige Ausgestaltung des oberen Halteelements den Vorteil, dass sich das elektronische Gerät, wenn es an dem oberen Halteelement frei eingehängt wird, von selber in die richtige Position justiert, so dass sich damit das zweite Halteelement quasi automatisch in die untere Ausformung einfügt

Es gibt prinzipiell unterschiedliche Möglichkeiten das bewegliche Halteelement gegen die Ausformung an dem transportablen elektronischen Gerät zu spannen, wobei es in einem besonders bevorzugten Ausführungsbeispiel vorgesehen ist, dass das bewegliche Halteelement mit einem Federmechanismus in die Fixierstellung gespannt wird. Der Federmechanismus ermöglicht es dabei insbesondere im Hinblick auf Kräfte, die bei einer Autofahrt auftreten, eine elastische dauerhafte Verbindung zwischen dem beweglichen Halteelement und der Ausformung am transportablen elektronischen Gerät zu gewährleisten.

Die Realisierung des Federmechanismus ist in einem bevorzugten Ausführungsbeispiel derart vorgesehen, dass die Grundplatte mit den Halteelementen einstückig aus einem Kunststoff hergestellt ist, wobei der Federmechanismus als elastische, bewegliche Anlenkung des Halteelements ausgebildet ist. Dieses Element ist maschinell schnell und günstig herzustellen, da sowohl die Grundplatte als auch der Federmechanismus in einem Teil geformt sind. Dabei ist es von besonderer Bedeutung, dass das bewegliche Halteelement im Bereich der Anlenkung an die Grundplatte derart elastisch ist, das auf Dauer eine feste Verbindung von Befestigungsvorrichtung und dem elektronischen Gerät erzeugt wird. Diese Art der Anordnung eines Halteelements erleichtert zudem ein einhändiges Einlegen des elektronischen Geräts in die Befestigungsvorrichtung.

Bei der Ausformung des beweglichen Halteelements ist unter anderem auf die Art des Eingriffs in das transportable elektronische Gerät zu achten, wobei es in einer bevorzugten Ausführungsform vorgesehen ist, dass das bewegliche Halteelement als Schnapphaken ausgeführt ist. So kann das bewegliche Halteelement mithilfe einer Einführschräge ausgelenkt werden. Vorteilhafterweise kann so der Schnapphaken beim einhändigen Einlegen des Geräts in die Befestigungsvorrichtung aus einer Ruheposition gedrückt werden, um anschließend in Folge rückstellender Kräfte in der Fixierstellung einzuhaken. Das Einlegen wird dabei durch die Einführschräge verbessert, da so der Schnapphaken durch eine Kraft, die im Wesentlichen senkrecht zur Richtung der Auslenkung des Hakens verläuft, ausgelenkt werden kann.

Zur Erhöhung des Komforts ist darüber hinaus sehr bevorzugt in einem Ausführungsbeispiel, das bewegliche Halteelement mit einer Handbetätigung auszuführen. So kann beim Lösen des Geräts der Schnapphaken aus der Fixierstellung ausgehakt werden, indem einfach eine Kraft auf einen Handbetätigungsabsatz, der an dem beweglichen Halteelement vorgesehen ist, aufgebracht wird. Diese Handbetätigung kann dabei ebenfalls einstückig mit der Grundplatte und dem beweglichen Halteelement ausgeführt sein, was so die Herstellungskosten erniedrigt.

Eine bevorzugte Ausführungsform sieht weiterhin vor, dass an der Grundplatte im Bereich der Handbetätigung ein Betätigungsschutz, insbesondere ein Schutzbügel, vorgesehen ist, der die Stellbewegung des beweglichen Halteelements begrenzt und zum Schutz vor einer versehentlichen Betätigung dient. Insbesondere zur Erhaltung der Elastizität eines an der Grundplatte elastisch beweglich angelenkten Halteelements ist es wichtig, die materialeigenen, elastischen Rückstellkräfte zu erhalten, indem eine Überdehnung vermieden wird. Dies kann beispielsweise derart realisiert sein, dass der Betätigungsschutz die Bewegung des Halteelements begrenzt, wobei dieser als einfacher Anschlag ausgeführt sein kann. Zudem ist der Betätigungsschutz so vorsehbar, dass ein versehentliches Lösen des transportablen elektronischen Geräts vermieden wird, wie durch einen Stoß oder durch ein Hängenbleiben.

Die Ausformung der Halteelemente unterliegt prinzipiell keiner Beschränkung, wobei eine bevorzugte Ausführungsform vorsieht, dass mindestens ein Halteelement zumindest bereichsweise hakenförmig ausgebildet ist, wobei das Halteelement hintergriffartig in die jeweilige Ausformung am transportablen elektronischen Gerät einlegbar ist. Die hakenförmige Ausführungsform ermöglicht dabei die Befestigung in der Art, dass das transportable elektronische Gerät in den Haken des starren Halteelements eingeschoben wird, wobei das transportable elektronische Gerät gegen die Grundplatte gespannt werden kann. Die hakenförmige Ausführungsform ermöglicht weiterhin eine elastische Anlage der Halteelemente.

Als besonders bevorzugtes Ausführungsbeispiel ist vorgesehen, dass der Federmechanismus mit einem Federelement ausgeführt ist, wobei insbesondere das Federelement mittelbar und/oder unmittelbar zwischen dem Halteelement und der Grundplatte verspannt wird. Dieses Federelement kann auch auswechselbar sein, um in vorteilhafter Weise die Spannkräfte entsprechend verschiedenen Geräten anzupassen, wobei auch bei nachlassenden Materialkräften der Einsatz zusätzlicher Federelemente vorsehbar ist.

Um das Einlegen und die Halterung des transportablen elektronischen Geräts an der Befestigungsvorrichtung zu verbessern, können die verschiedensten Maßnahmen durchgeführt werden, wobei in einem bevorzugten Ausführungsbeispiel vorgesehen ist, dass an der Grundplatte Fixierelemente ausgebildet sind. Diese dienen der Führung beim Einlegen und erhöhen hinsichtlich der Kräfte in der Ebene der Grundplatte den Halt zwischen der Befestigungsvorrichtung und dem transportablen elektronischen Gerät, indem die Fixierelemente in entsprechenden Ausnehmungen anliegen.

Die Anordnung der Befestigungsvorrichtung in dem Kraftfahrzeug ist prinzipiell egal, wobei es in einem bevorzugten Ausführungsbeispiel vorgesehen ist, dass die Montageeinrichtung eine schraubbare Dreiecksanbindung aufweist. Dies stellt eine einfache und zur Übertragung der auftretenden Kräfte günstige Montagelösung dar.

Zur komfortablen Bedienung des transportablen elektronischen Geräts ist vorgesehen, dieses derart beweglich anzuordnen, dass es in verschiedene Positionen verstellt werden kann. Dazu sieht ein bevorzugtes Ausführungsbeispiel vor, dass die Montageeinrichtung gelenkig an der Grundplatte angeordnet ist, insbesondere über ein Kugelgelenk, um beispielsweise die Vorrichtung in verschiedenen Richtungen zu verkippen.

Im Folgenden wird die erfindungsgemäße Befestigungsvorrichtung anhand lediglich bevorzugter Ausführungsformen darstellender Zeichnungen näher erläutert.

Es zeigen:
- Fig. 1: perspektivische Ansicht der Vorderseite der Befestigungsvorrichtung;
- Fig. 2: Seitenansicht der Befestigungsvorrichtung;
- Fig. 3: perspektivische Ansicht der Befestigungsvorrichtung von schräg unten;
- Fig. 4: Seitenansicht der Befestigungsvorrichtung beim Einhaken des transportablen elektronischen Geräts in geöffnetem Zustand;
- Fig. 5: Seitenansicht der Befestigungsvorrichtung während des Einhakvorgangs nach Fig. 4 in einem fast geschlossenen Zustand;
- Fig. 6: Seitenansicht der Befestigungsvorrichtung während des Einhakvorgangs nach Fig. 4 und Fig. 5 in geschlossenem Zustand;
- Fig. 7: Hinteransicht eines transportablen elektronischen Geräts mit einer abgedeckten Ausnehmung;
- Fig. 8: Hinteransicht eines transportablen elektronischen Geräts, wobei ein Deckel für die Ausnehmung zur Montage an der Befestigungsvorrichtung abgenommen ist.

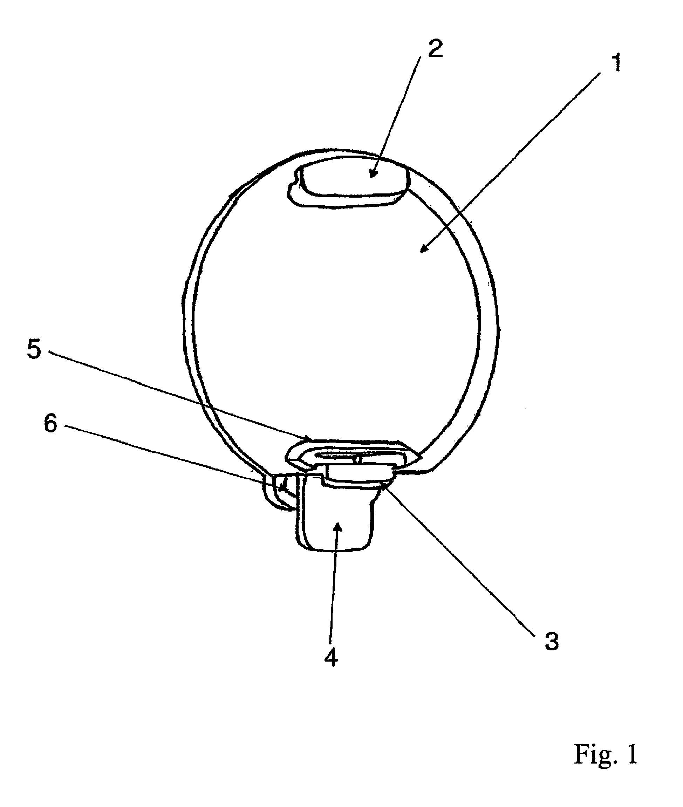

In Fig. 1 wird die Befestigungsvorrichtung in der Vorderansicht gezeigt, wobei der Befestigungsvorrichtung eine Grundplatte 1 zu entnehmen ist, an der ein starres Halteelement 2 und ein bewegliches Halteelement 3 angeordnet sind. Das bewegliche Halteelement 3 ist über eine Handbetätigung 4 bewegbar, um das bewegliche Halteelement 3 aus der Eingriffsstellung in eine Nichteingriffsstellung zu bewegen, indem die Handbetätigung 4 nach vorne in Richtung des eingehakten transportablen elektronischen Geräts gedrückt wird. Zur verbesserten Montage des elektronischen Geräts ist vorgesehen, dass dieses über Fixierelemente 5 zusätzlich an der Grundplatte 1 gehalten wird. Die Befestigungsvorrichtung ist in dem gezeigten Ausführungsbeispiel vorteilhaft aus einem einstückigen Kunststoffteil gefertigt, wobei das bewegliche Halteelement 3 über einen elastischen Bereich an der Grundplatte 1 angelenkt ist. Um diesen Bereich zu schützen, ist an der Grundplatte 1 zudem ein Betätigungsschutz 6 in Form eines Schutzbügels angeordnet, der die Bewegung des beweglichen Halteelements 3 derart einschränkt, dass die Elastizität in dem angelenkten Bereich erhalten bleibt.

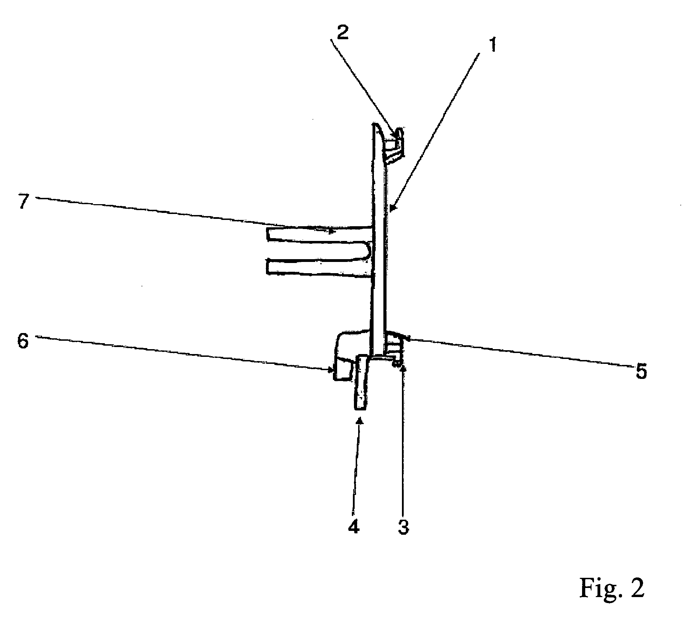

In Fig. 2 ist die seitliche Perspektive der Befestigungsvorrichtung nach Fig. 1 zu entnehmen, wobei an einer Grundplatte 1 ein starres Halteelement 2 und ein bewegliches Halteelement 3 angeordnet sind. Ein transportables elektronisches Gerät kann an der Befestigungsvorrichtung derart angeordnet werden, dass dieses in das starre Halteelement 2 eingehakt und parallel zur Grundplatte 1 angelegt wird, so dass das bewegliche Halteelement 3 in einen Bereich des transportablen elektronischen Geräts in Eingriff gelangt. Das bewegliche Halteelement 3 kann dabei über eine Handbetätigung 4 geklappt werden, wobei die Handbetätigung 4 über einen Betätigungsschutz 6 in der Bewegung eingeschränkt ist. Der seitlichen Perspektive ist zudem die Montageeinrichtung 7 zu entnehmen, die aus zwei Steckelementen besteht, die beispielsweise in Lüftungsschlitze versenkt werden können. Die Montageeinrichtung 7 ist dazu mittig an der Rückseite der Grundplatte 1 ausgebildet.

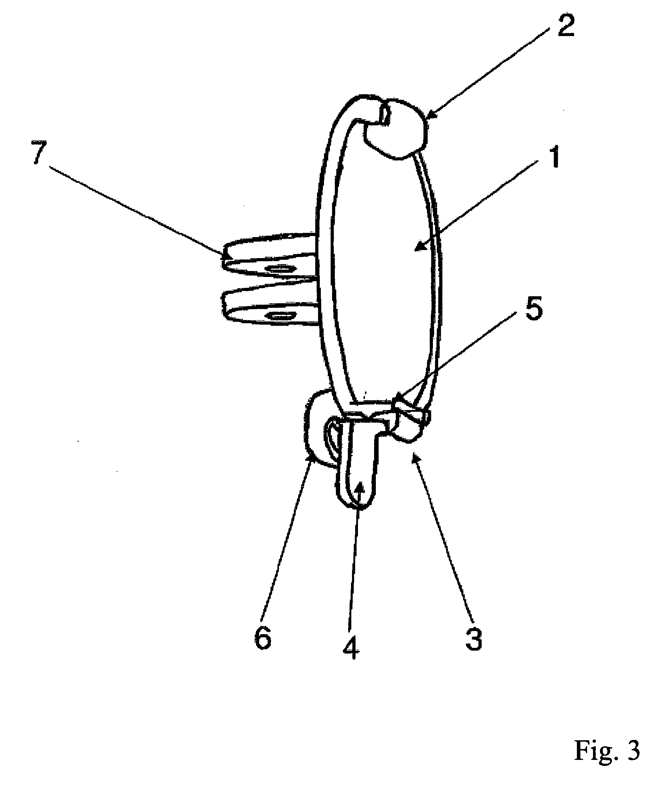

Fig. 3 zeigt wiederum die Befestigungsvorrichtung aus einer Perspektive von vorne schräg unten, wobei die Befestigungsvorrichtung aus einer Grundplatte 1, an der ein starres Halteelement 2 und ein bewegliches Halteelement 3 angeordnet sind, besteht und wobei das bewegliche Halteelement 3 über eine Handbetätigung 4 betätigbar ist. Die Handbetätigung 4 ist wiederum über einen Betätigungsschutz 6 in der Bewegung beschränkt. Bei dem gezeigten Ausführungsbeispiel 3 ist insbesondere die Montageeinrichtung 7 derart zu entnehmen, dass an dieser zwei Einsteckelemente mit Fixieröffnungen für ein verankerbares Fixierelement 5 entlang einer Achse angeordnet sind. Die Einsteckelemente der Montageeinrichtung 7 verfügen jeweils über eine Öffnung, in die ein Arretierstab eingelegt werden kann.

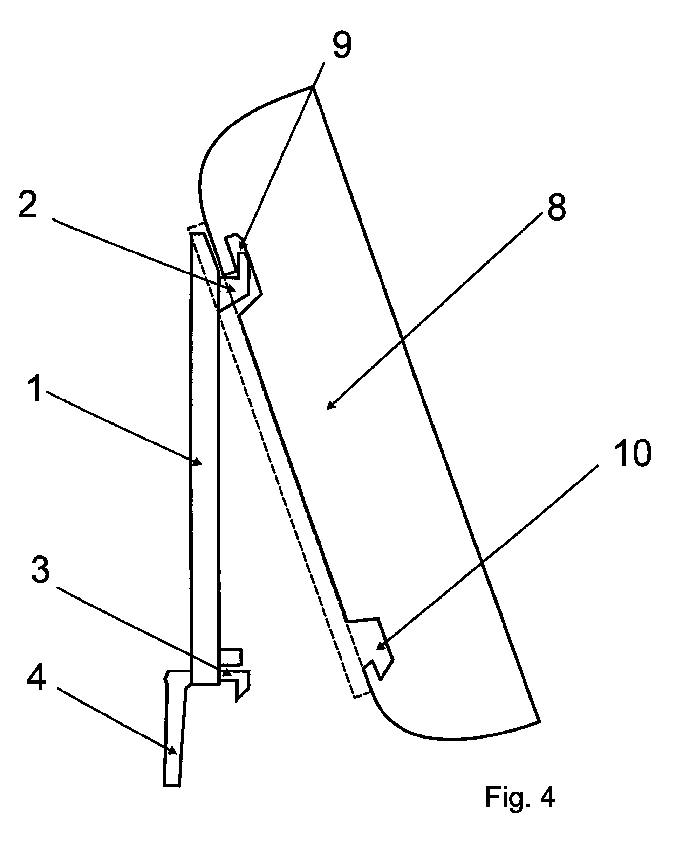

Fig. 4 ist nun die Montage eines transportablen Geräts an der Befestigungsvorrichtung zu entnehmen, wobei das transportable elektronische Gerät eine erste Ausnehmung 9 und eine zweite Ausnehmung 10 aufweist. Die Befestigungsvorrichtung verfügt über ein starres Halteelement 2, welches bei der in Fig.4 gezeigten Stellung in der ersten Ausnehmung 9 in Eingriff bringbar ist, da beim Einlegen zuerst das starre Halteelement 2 in die erste Ausnehmung 9 eingelegt wird.

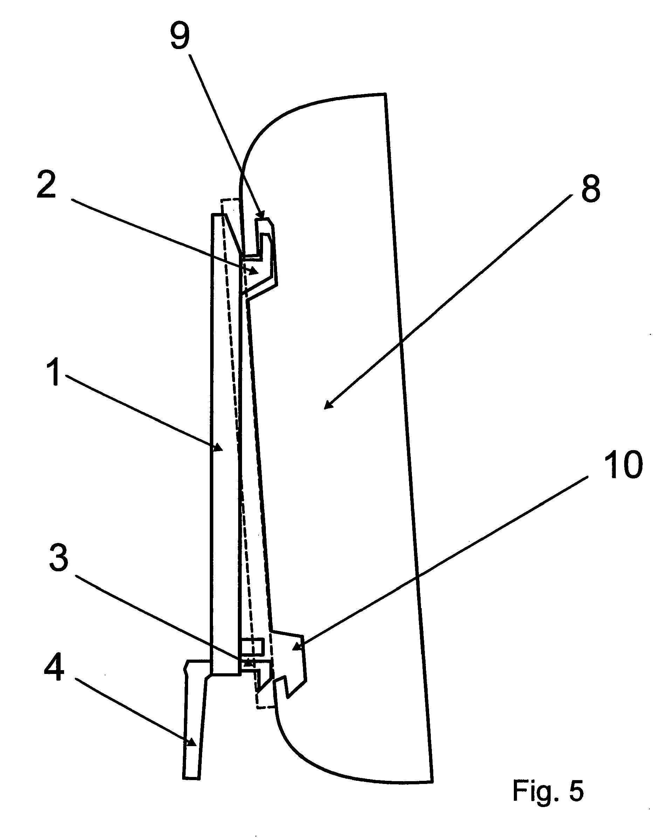

Fig. 5 zeigt den Montagevorgang in einem nächsten, fast geschlossenen Zustand, wobei das starre Halteelement 2 vollständig in die erste Ausnehmung 9 eingelegt ist und das bewegliche Halteelement 3 nun derart an einer Ausformung 10 an dem transportablen elektronischen Gerät anliegt, dass dieses über eine abgeschrägte Führungsfläche in die Ausformung 10 eingeschoben werden kann.

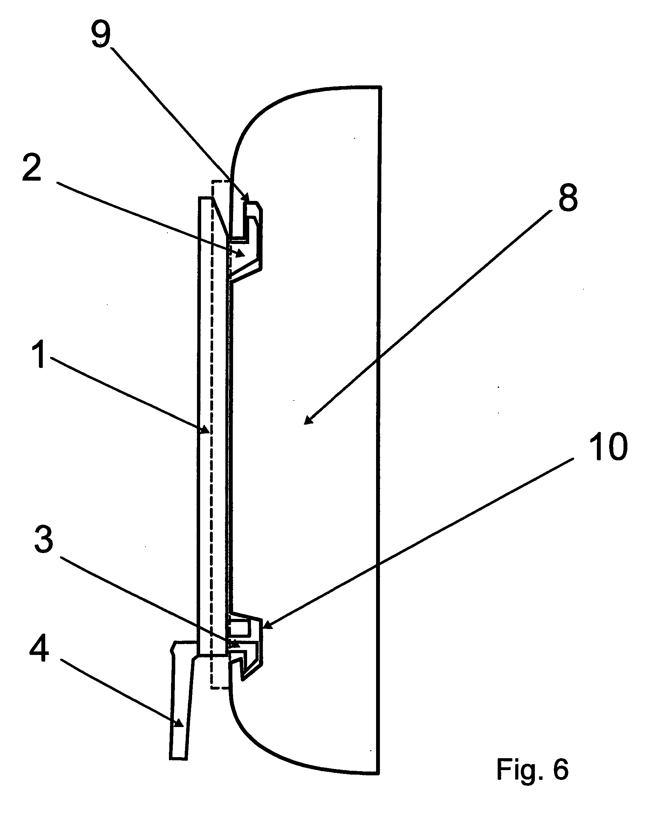

Fig. 6 zeigt die verhakte Stellung, in der die Grundplatte 1 parallel zur Rückseite des transportablen elektronischen Geräts 8 liegt und das starre Halteelement 2, welches an der Grundplatte 1 angeordnet ist, in der ersten Ausformung 9 am transportablen elektronischen Gerät 8 eingehakt ist. Das bewegliche Halteelement 3 ist wiederum mit einer Handbetätigung 4 an der Grundplatte 1 angeordnet und ist dabei in die zweite Ausformung 10 des transportablen elektronischen Geräts 8 eingehakt.

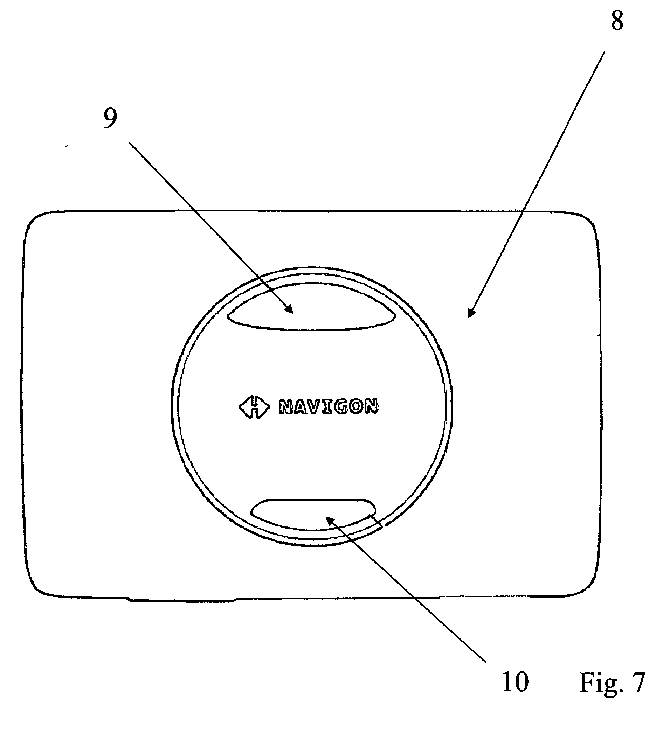

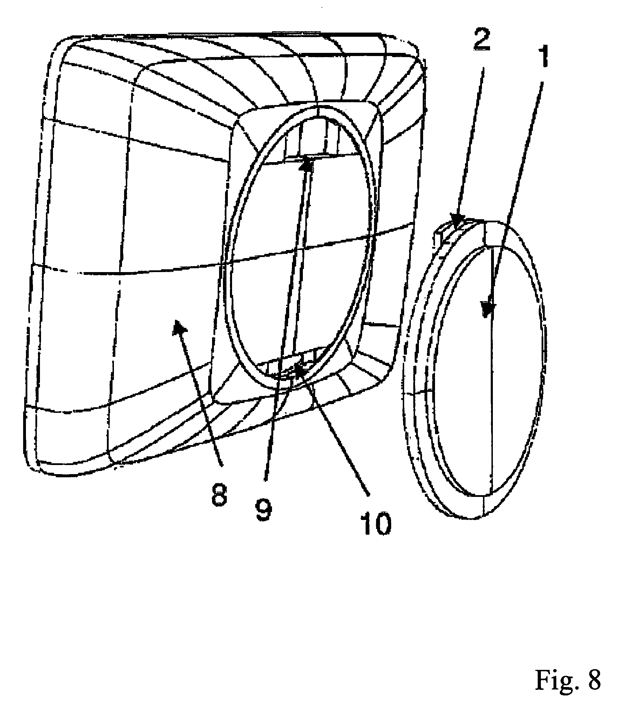

Die Fig. 7 und 8 zeigen nun beispielhaft ein transportables elektronisches Gerät in Form eines Navigationsgeräts, wobei das Gehäuse 8 auf der Rückseite mit einem Deckel versehen ist, der eine Ausnehmung verschließt, die komplementär zur Grundplatte des transportablen elektronischen Geräts ausgeformt ist. Der Fig. 8 ist dazu ein transportables elektronisches Gerät 8 zu entnehmen, bei dem unterhalb einer Abdeckung, die im Wesentlichen wie die Grundplatte 1 der Befestigungsvorrichtung ausgeformt ist, eine erste Ausformung 9 und eine zweite Ausformung 10 ausgeführt sind. In diese kann eine Grundplatte, wie diese beispielsweise ähnlich dem Deckel gestaltet ist, eingebracht werden. Der Deckel ist dabei aber nicht der Grundplatte äquivalent, da dort kein bewegliches Halteelement gezeigt ist.

## Patentansprüche

1. Befestigungsvorrichtung zur lösbaren Befestigung eines transportablen elektronischen Geräts, insbesondere eines mobilen Navigationsgeräts, umfassend eine Grundplatte (1) mit einer Montageeinrichtung (7) zur fahrzeugseitigen Anordnung, wobei die Grundplatte (1) mindestens ein starres Halteelement (2) und/oder mindestens ein bewegliches Halteelement (3) aufweist, und wobei jedes Halteelement in Ausnehmungen (9, 10) an dem transportablen elektronischen Gerät in Eingriff bringbar ist, **dadurch gekennzeichnet, dass** die Grundplatte (1) einen Vorsprung aufweist, der in einer Fixierstellung in eine formkomplementäre Ausnehmung (9, 10) auf der Rückseite des transportablen elektronischen Geräts zur Anlage bringbar ist, wobei mindestens ein Halteelement (2, 3) eine zumindest bereichsweise sichelförmig ausgebildete Kontaktfläche aufweist.

2. Befestigungsvorrichtung nach Anspruch 1,
**dadurch gekennzeichnet,**
**dass** das bewegliche Halteelement (3) mit einem Federmechanismus in der Fixierstellung gespannt wird.

3. Befestigungsvorrichtung nach Anspruch 2,
**dadurch gekennzeichnet,**
**dass** die Grundplatte (1) mit den Halteelementen (2, 3) einstückig aus einem Kunststoff hergestellt ist, wobei der Federmechanismus als elastische bewegliche Anlenkung des beweglichen Halteelements (3) ausgebildet ist.

4. Befestigungsvorrichtung nach einem der Ansprüche 1 bis 3,
**dadurch gekennzeichnet,**
**dass** das bewegliche Halteelement (3) als Schnapphaken ausgeführt ist, wobei das bewegliche Halteelement (3) eine Einführschräge aufweist.

5. Befestigungsvorrichtung nach einem der Ansprüche 1 bis 4,
**dadurch gekennzeichnet,**
**dass** das bewegliche Halteelement (3) eine Handbetätigung (4) aufweist.

6. Befestigungsvorrichtung nach Anspruch 5,
**dadurch gekennzeichnet,**
**dass** an der Grundplatte (1) im Bereich der Handbetätigung (4) ein Betätigungsschutz (6), insbesondere ein Schutzbügel, vorgesehen ist, der die Stellbewegung des beweglichen Halteelements (3) begrenzt.

7. Befestigungsvorrichtung nach einem der Ansprüche 1 bis 6,
**dadurch gekennzeichnet,**
**dass** mindestens ein Halteelement (2, 3) zumindest bereichsweise hakenförmig ausgebildet ist, wobei das Halteelement (2, 3) hintergriffartig in die jeweilige Ausnehmung (9, 10) an dem transportablen elektronischen Gerät einlegbar ist.

8. Befestigungsvorrichtung nach Anspruch 2,
**dadurch gekennzeichnet,**
**dass** der Federmechanismus mit einem Federelement ausgeführt ist, wobei insbesondere das Federelement mittelbar und/oder unmittelbar zwischen dem beweglichen Halteelement (3) und der Grundplatte (1) verspannt wird.

9. Befestigungsvorrichtung nach einem der Ansprüche 1 bis 8,
**dadurch gekennzeichnet,**
**dass** an der Grundplatte (1) Fixierelemente (5) ausgebildet sind.

10. Befestigungsvorrichtung nach einem der Ansprüche 1 bis 9,
**dadurch gekennzeichnet,**
**dass** die Montageeinrichtung (7) eine schraubbare Dreiecksanbindung aufweist.

11. Befestigungsvorrichtung nach einem der Ansprüche 1 bis 10,
**dadurch gekennzeichnet,**
**dass** die Montageeinrichtung (7) gelenkig an der Grundplatte (1) angeordnet ist, insbesondere über ein Kugelgelenk.

## Claims

1. A mounting device for releasably mounting a mobile electronic device, in particular a mobile navigation device, comprising a base plate (1) with a mounting means (7) for arrangement on the vehicle side, wherein the base plate (1) comprises at least one rigid retaining element (2) and/or at least one movable retaining element (3), and wherein each retaining element can be brought into engagement in recesses (9, 10) on the mobile electronic device, **characterized in that** the base plate (1) comprises a projection which in a fixing position can be brought into abutment in a recess (9, 10), which is complementary with respect to shape, on the rear side of the mobile electronic device, wherein at least one retaining element (2, 3) comprises a contact surface having a crescent-shaped configuration at least in certain areas.

2. The mounting device according to claim 1,
**characterized in that**
the movable retaining element (3) is tensioned in the fixing position by means of spring mechanism.

3. The mounting device according to claim 2,
**characterized in that**
the base plate (1) with the retaining elements (2, 3) is integrally formed in one piece from a plastic material, wherein the spring mechanism is constructed as an elastic movable articulation of the movable retaining element (3).

4. The mounting device according to any of claims 1 to 3,
**characterized in that**
the movable retaining element (3) is configured as a snap hook, wherein the movable retaining element (3) comprises an insertion bevel.

5. The mounting device according to any of claims 1 to 4,
**characterized in that**
the movable retaining element (3) comprises a manual actuation (4).

6. The mounting device according to claim 5,
**characterized in that**
on the base plate (1) in the region of the manual actuation (4) an actuation guard (6), in particular a guard bracket, is provided, which limits the adjustment movement of the movable retaining element (3).

7. The mounting device according to any of claims 1 to 6,
**characterized in that**
the at least one retaining element (2, 3) is configured hook-shaped at least in certain areas, wherein the retaining element (2, 3) can be positioned in a manner engaging behind in the respective recess (9, 10) on the mobile electronic device.

8. The mounting device according to claim 2,
**characterized in that**
the spring mechanism is constructed with a spring element, wherein in particular the spring element is indirectly and/or directly tensioned between the movable retaining element (3) and the base plate (1).

9. The mounting device according to any of claims 1 to 8,
**characterized in that**
fixing elements (5) are formed on the base plate (1).

10. The mounting device according to any of claims 1 to 9,
**characterized in that**
the mounting means (7) comprises a screwable triangular connection.

11. The mounting device according to any of claims 1 to 10,
**characterized in that**
the mounting device (7) is arranged in an articulated manner on the base plate (1), in particular via a ball joint.

## Revendications

1. Dispositif de fixation permettant la fixation amovible d'un appareil électronique transportable, en particulier un appareil de navigation mobile, comportant un socle (1) avec un dispositif de montage (7) pour l'agencement du côté du véhicule, le socle (1) comportant au moins un élément de retenue rigide (2) et/ou au moins un élément de retenue mobile (3), et chaque élément de retenue pouvant être amené en prise dans des évidements (9, 10) sur l'appareil électronique transportable, **caractérisé en ce que** le socle (1) comporte une saillie qui, dans une position de fixation, peut être amenée en appui dans un évidement (9, 10) de forme complémentaire sur la face arrière de l'appareil électronique transportable, au moins un élément de retenue (2, 3) comportant une surface de contact réalisée au moins par zones en forme de croissant.

2. Dispositif de fixation selon la revendication 1, **caractérisé en ce que** l'élément de retenue mobile (3) est tendu dans la position de fixation par un mécanisme à ressort.

3. Dispositif de fixation selon la revendication 2, **caractérisé en ce que** le socle (1) est réalisé d'un seul tenant avec les éléments de retenue (2, 3) dans une matière plastique, le mécanisme à ressort étant réalisé sous la forme d'une articulation élastiquement mobile de l'élément de retenue mobile (3).

4. Dispositif de fixation selon l'une quelconque des revendications 1 à 3, **caractérisé en ce que** l'élément de retenue mobile (3) est réalisé sous la forme d'un crochet à encliquetage, l'élément de retenue mobile (3) comportant une pente d'introduction.

5. Dispositif de fixation selon l'une quelconque des revendications 1 à 4, **caractérisé en ce que** l'élément de retenue mobile (3) comporte une poignée (4).

6. Dispositif de fixation selon la revendication 5, **caractérisé en ce que** sur le socle (1), dans la zone de la poignée (4), est prévue une protection anti-manoeuvre (6), en particulier un étrier de protection qui limite le mouvement de réglage de l'élément de retenue mobile (3).

7. Dispositif de fixation selon l'une quelconque des revendications 1 à 6, **caractérisé en ce qu'**au moins un élément de retenue (2, 3) est réalisé, au moins par zones, en forme de crochet, l'élément de retenue (2, 3) pouvant être inséré de manière à s'engager par l'arrière dans l'évidement (9, 10) correspondant dans l'appareil électronique transportable.

8. Dispositif de fixation selon la revendication 2, **caractérisé en ce que** le mécanisme à ressort est réalisé avec un élément de ressort, ledit élément de ressort étant tendu directement et/ou indirectement entre l'élément de retenue mobile (3) et le socle (1).

9. Dispositif de fixation selon l'une quelconque des revendications 1 à 8, **caractérisé en ce que** des éléments de fixation (5) sont réalisés sur le socle (1).

10. Dispositif de fixation selon l'une quelconque des revendications 1 à 9, **caractérisé en ce que** le dispositif de montage (7) comporte une attache triangulaire apte à être vissée.

11. Dispositif de fixation selon l'une quelconque des revendications 1 à 10, **caractérisé en ce que** le dispositif de montage (7) est disposé de manière articulée contre le socle (1), en particulier par l'intermédiaire d'un joint à rotule.
